# EUROPEAN PATENT SPECIFICATION

(11) **EP 2 063 378 B1**
(45) Date of publication and mention of the grant of the patent: **22.04.2020**
(21) Application number: 08275071.2
(22) Date of filing: 13.11.2008
(51) Int. Cl.: G06F 21/34, H04W 12/08, G06F 21/33, H04L 29/06

(54) **TELECOMMUNICATIONS DEVICE SECURITY**
TELEKOMMUNIKATIONSVORRICHTUNGSSICHERHEIT
SÉCURITÉ DE DISPOSITIF DE TÉLÉCOMMUNICATIONS

(30) Priority: 13.11.2007 GB 0722267
(43) Date of publication of application: 27.05.2009
(73) Proprietor: Vodafone Group PLC, Newbury Berkshire RG14 2FN (GB)
(72) Inventor: Belrose, Caroline, Marlborough, Wiltshire SN8 4AG (GB); Bone, Nicholas, Thatcham, Berkshire RG19 4RS (GB); Priestley, Mark, Newbury, Berkshire RG14 2FN (GB)
(74) Representative: Boult Wade Tennant LLP

(56) References cited:
- WO-A-2006/024991
- US-A1- 2003 046 567
- US-A1- 2004 158 716
- US-A1- 2005 213 763

## Description

### Field of the Invention

The present invention relates to a terminal having one or more domains to which access is controlled by the presence of a removable attachment. The present invention also relates to a removable attachment for use with such a terminal, and a method of providing functions trusted by a third party in the terminal, particularly a terminal for use with a cellular or mobile telecommunications network.

### Background to the Invention

There are certain applications and data on a terminal that are sensitive to who is accessing them and under what conditions. Applications and data can be grouped together into domains where each domain can be accessed only by a particular user or set of users. An example of a domain that is sensitive is a corporate area of a terminal, which contains private data relating to a company owning the terminal. This is particularly the case with mobile terminals, such as mobile phones, Personal Digital Assistants (PDAs) and the like.

Access to the terminal's functionality can be protected through the use of a terminal PIN. Similarly, access to SIM or USIM functionality can also be protected through the use of a SIM PIN.

Therefore, when a user wishes to access a sensitive application or data, they are usually required to enter a password or PIN to unlock the application or data. For example, the user may be required to enter a PIN to unlock their terminal, and then a PIN to unlock their SIM card and then a PIN or password to unlock a sensitive application and/or data.

A problem with this approach is that users do not normally pick strong passwords or PINs, thereby diminishing the security that they afford. Further, if users have to use multiple PINs or passwords, they tend to set them all to be the same, again diminishing the security that the PINs aim to achieve.

One approach to the storage of username and password pairs is suggested in US patent application US2003/0046567. Here the problem is to provide the username password pairs needed for access to certain websites. The username and password pairs are stored in an encrypted form on a memory card and when the card is attached to a device that is attempting to access a particular website the user simply unlocks the card. With a valid unlock request, the relevant username and password pair is retrieved and used by the browser to complete the username and password fields for that website.

International patent application WO2006/024991 describes the use of a user identify card to authenticate both user and his rights to access to one or more particular devices or content areas which otherwise have restricted access.

Whilst users can be forced to select strong passwords in order to increase the security afforded by the passwords, such passwords are generally more complex, so the burden on the user in remembering them is increased.

US2005/0213763 describes the use of domains on a mobile terminal that require a single step private key verification approach in order to save data to the domains. That is, a domain controller will not place information in a domain unless a digital signature associated with the information is verified, and in this regard, the domain controller retrieves a corresponding key for the domain from a key store on the mobile terminal to perform the verification.

There is therefore a need to provide a mobile terminal with a method of providing strong access control to secure applications and data, without increasing the burden on users.

There are similar issues with terminals having Trusted Platform Modules (TPMs) or Mobile Trusted Modules (MTMs).

A Trusted Platform Module (TPM) is a security module defined by the Trusted Computing Group (TCG) to provide protected security functions to computing platforms. The TCG is an industry organisation providing a focal point of security standardisation for computing devices.

Typically, a TPM is implemented as an additional stand-alone chip attached to a PC motherboard. However, TPMs may be implemented in hardware or software.

A TPM can be considered to include various building blocks. A building block of a trusted platform TPM component is trusted to work properly without additional supervision. Trust in these components is derived from good engineering practices, manufacturing processes and industry review.

Example building block components may include:-
*Input*/*Output (I*/*O)*
   The I/O component manages information flow over a communications bus. It performs protocol encoding/decoding suitable for communication over external and internal buses, and routes messages to appropriate components.
*Non- Volatile Storage*
   Non-volatile storage is used to store Endorsement Key (EK), Storage Root Key (SRK), owner authorisation data and persistent flags. Platform Configuration Registers (PCR) can be implemented in either volatile or non-volatile storage. They are reset at system start or whenever the platform loses power.
*Attestation Identity Key (AIK)*
   Attestation Identity Keys must be persistent, but it is recommended that AIK keys be stored as Blobs (binary large objects) in persistent external storage (outside the TPM), rather than stored permanently inside TPM non-volatile storage.
*Program Code*
   Program code contains firmware for measuring platform devices. Logically, this is the Core Root of Trust for Measurement (CRTM). Ideally, the CRTM is contained in the TPM, but implementation decisions may require it be located in other firmware.
*Random Number Generator (RNG)*
   The RNG is used for key generation, nonce creation and to strengthen pass phrase entropy.
*Sha-1 Engine*
   A Sha-1 message digest engine is used for computing signatures, creating key Blobs and for general-purpose use.
*RSA Key Generation*
   The RSA key generation engine is use to create *signing keys* and *storage keys.*
*RSA Engine*
   The RSA engine is used for signing with *signing keys,* encryption/decryption with *storage keys,* and decryption with the EK.
*Execution Engine*
   The execution engine runs program code. It performs TPM initialisation and measurement taking.

The TCG also has a Mobile Phone Working Group, standardising a version of the TPM - Mobile Trusted Module (MTM) - to be implemented on Mobile Equipment (ME) such as a mobile or cellular telecommunications terminal. TPM, TCG and MTM are described in the documents available at this URL: https://www.trustedcomputinggroup.org/specs/mobilephone/.

As is known, the Mobile Phone Working Group's model allows for a software application running in a Secure Execution Environment (SEE) on a mobile terminal to emulate the effect of a TPM chip. The MTM may also be implemented using a discrete chip, as for a TPM. The principle behind the MTM is for users or so-called "stakeholders" to confidently establish trust in a piece of hardware, software and/or network used in relation to a mobile terminal.

In mobile terminals, the MTM runs in a protected memory area, and has many useful applications installed for which extra security is required, such as mobile payment, mobile ticketing, SIM Lock/Device Personalisation, mobile commerce and corporate network access control.

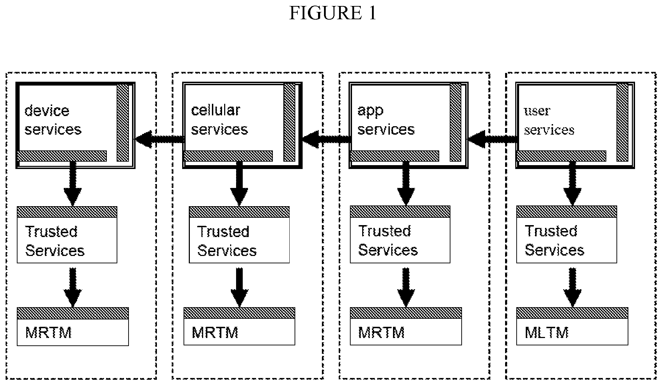

A generalised trusted mobile platform is shown in Figure 1, which contains multiple engines, each acting on behalf of a different stakeholder. A "stakeholder" can be considered to be an entity that is authorised to have a presence in the mobile device and which needs the ability to control and protect its individual interests in the mobile device. Stakeholders in a mobile phone include the device user(s), the device owner, the network service provider, the device manufacturer and potentially other third party service providers. There may be multiple user and service provider stakeholders, but only one device manufacturer stakeholder in a platform.

An "engine" is a dedicated processor or runtime environment with access to trusted resources, which is used to run trusted services and normal services. In other words, it is a construct that can manipulate data, provide evidence that it can be trusted to report the current state of the platform and provide evidence about the current state of the platform. The purpose of an engine is to enable confidence in all the services exported and construed by the engine. All secret information in relation to an engine is stored in its MTM, which can be a "virtual" MTM.

Each engine is isolated from other engines. The strength and form of isolation may vary depending upon the purpose of the trusted mobile platform. The resources of the engines are provided by the platform and/or another engine. For instance, an engine may consist entirely of dedicated resources or may have parts of it instantiated as allocated resources.

Some engines are mandatory, and others are discretionary. A mandatory engine is authorised by the device manufacturer or the device owner, and must be present in a platform for the platform to maintain its trusted state. A discretionary engine is a trusted engine that may be present in a platform, under the authorisation of the device owner.

The engines provide services on behalf of the stakeholders, such as device services, cellular access services, application services and/or user services. In Figure 1, the solid rectangles indicate engine interfaces and the solid arrows indicate dependency, with the arrow pointing away from the dependent entity. The device manufacturer's engine is typically responsible for the integrity and configuration of a device, including the presence of mandatory engines and specified discretionary engines in the platform, coordinating communications between engines in the platform and controlling access to protected platform resources.

In the Figure 1 example, the device engine provides basic platform resources, which include a user interface, debug connector, a radio transmitter and receiver, Random Number Generator, the IMEI, and a SIM interface. The device engine provides its services to a cellular engine, which in turn provides cellular services. Similarly, the cellular engine provides its services to an application engine, and the application engine provides its services to a user engine.

In each engine, conventional services have access to Trusted Services, which make measurements of the conventional services and stores those measurements in their respective Mobile Trusted Module (MTM). In this regard, each Engine may have its own MTM, or there may be one physical MTM of which each Engine has a dedicated portion, that portion being a "virtual" MTM.

The MTM, like the TPM, protects keys and other secret information while a platform is switched off and only enables keys (and other secret data) to be used by the proper entity when the MTM is securely switched on. The MTM also has commands that enable selected stakeholder applications to boot in a safe environment in the mobile device, without interfering with the rights of other stakeholders.

The device, cellular and application engines have a Mobile Remote-Owner Trusted Module (MRTM), whereas the user engine has a Mobile Local-Owner Trusted Module (MLTM). The MRTM differs from the MLTM primarily in that the MRTM is required to contain additional Protected Capabilities to support a secure boot process. The secure boot process forces the engine to boot properly, or not at all, and so provides greater confidence that certain services are correctly instantiated when they are available. The secure boot process is particularly valuable to entities whose engines are constrained by regulations. Further, remote stakeholders typically have an MRTM because those stakeholders (such as the phone manufacturer and the cellular network provider) do not have physical access to the phone and need a secure boot process to ensure that their engines do what is needed, such as to preset the operation of some parts of the phone (e.g. to preset access to the IMEI and the cellular network).

The user of the device typically has an MLTM because the user does have physical access to the phone and can load and locally authorise the software he wishes to execute. The MTMs can be trusted to report the current state of their engine and provide evidence about the current state of the engine.

MRTMs are required to support mandatory engines that provide the indispensable functionality of a trusted mobile platform. MLTMs typically support discretionary engines, which provide services that are capable of being added, removed, turned on and turned off without consent of any external service provider.

The MTM has much in common with the current TCG specification for Trusted Platform Modules (TPM) for personal computers. However, the MTM also provides functions that have been developed specifically for mobile devices - for example to take account of limitations of mobile device technologies.

The MTM extends security and interoperates with existing mobile device components such as SIM, USIM, and UICC cards. In addition, MTM may support security for OMA, 3GPP, MIPI, OMTP, and others. MTMs are intended to allow multiple trusted devices and components to work together and share the same security infrastructures.

An important aspect of the TCG architecture is that each Engine has a Stakeholder or "Owner" able to control critical functionality of the Engine, including whether it is active at all. In this regard, the owner has "ownerAuth" authorisation data to authenticate itself to the Engine's TPM/MTM. For locally owned Engines, where the user of the device is the Engine "owner", the ownerAuth data is often based on a PIN or password entered by the human user. Owner authorisation is performed by establishing a secure session with the TPM/MTM and the owner proving their possession of the relevant authorisation data.

In this regard there is again the problem of a still further password, PIN or other authorisation data for the owner of the terminal to remember in order to operate the Engines.

A further problem with the TPM/MTM management model is that since owners need to enter their authorisation data to use a given Engine, should they forget their PIN or password, they have no option but to reset the TPM/MTM, which will erase all data in the TPM/MTM. The owner will then need to start again and re-run the "take ownership" procedure in order to be able to use the Engines. This is also problematic, as it is a barrier to owners storing sensitive data in the TPM/MTM.

A further problem in relation to the Engines installed on a terminal, is associated with the fact that the Engine owner needs to create and insert the authorisation data into the TPM/MTM when taking ownership of an Engine. In this regard, it is to be appreciated that it is a part of the Trusted Computing Group specification that, for the reasons of privacy, it is necessary to activate and enable a TPM/MTM before it can be used, and accordingly before its associated Engines can be used. After activating and enabling a TPM/MTM, the true owner needs to immediately "take ownership" of it. However, as the TPM/MTM management model is not transparent to the owner it is possible that a large number of Engines will go unowned and unused. This is therefore a problem that needs to be addressed.

In a related aspect, until ownership is taken, a TPM/MTM is vulnerable to anyone who knows (or can read) the Public Endorsement Key (PubEK), where applicable, issuing the "take ownership" command to the TPM/MTM. There is therefore a need to eliminate, or at least minimise, the existence of unowned Engines as soon as possible.

Another feature of the TPM/MTM management model is the delegation of restricted access. Since it is difficult for owners who are remote from the device (such as manufacturers, network operators and other enterprises) to establish regular secure connections to the TPM/MTM, remote owners typically delegate restricted access and management privileges to a local proxy. Therefore, in this scenario, the local proxy is granted certain privileges, and is authenticated to the TPM/MTM using delegate authorisation data, which is a secondary PIN or password. For example, the MTM specification requires that in an MRTM, special "verificationAuth" data must be used for critical proxy functions such as: creating and installing Reference Integrity Metrics (RIMs) used in a verified boot process; increasing monotonic counters; creating and activating new identity keys for the MRTM. This verificationAuth (or other delegate authorisation data) is further information for the local proxy to store safely and not misplace, and so such proxies are also vulnerable to resetting operations.

### Summary of the Invention

Various aspects and embodiments of the invention are set out in the appended claims.

In accordance with one aspect of the present invention there is provided a method of controlling user access to one or more domains on a terminal, the method including: obtaining information relating to authorisation data from a removable storage device; providing data to the removable storage means for verification; performing a verification test in dependence upon said authorisation data and said data; and provided the verification test generates a positive verification result, receiving from the removable storage device an indication of whether the user is authorised to access the one or more domains.
In this way, by provisioning the device with a removable storage device, such as a SIM, which either contains the required authorisation data for a controlled domain, or is configured to obtain external authorisation data in respect of the domain, it becomes possible to control access to a single controlled domain or multiple controlled domains on a device, such that it can only be activated when a SIM or other removable storage device is present, and optionally one of the following criteria is met:
a) the user has been successfully authenticated to the removable storage device;
b) the user has been successfully authenticated to the terminal;
c) the removable storage device or an application on the removable storage device has successfully authenticated the terminal or an application on the terminal;
d) the terminal or an application on the terminal has successfully authenticated the removable storage device or an application on the removable storage device;
e) the removable storage device has confirmed the device is in a trusted state.

In this method, the data provided to the removable storage device for verification may be data received by the user. Alternatively, the data provided by the terminal to the removable storage device for verification may be measurement data relating to the one or more domains.

Where the removable storage device authenticates the terminal (criterion c, above) it may conveniently do so by determining an identifier of the terminal, such as its IMEI.

In this method, the indication may furthermore notify the terminal which one or ones of the one or more domains the user is entitled to access.

Where the authorisation data is on the SIM, it may be installed in a number of ways, including but not limited to, pre-configuring the data at manufacture (including SIM personalisation), Over The Air (OTA) installation - for example using ETSI TS 102.225 and ETSI TS 102.226; established via a local bootstrapping routine - for example using X.509 certificates stored on the device and on the SIM to establish a Secure Authenticated Channel (SAC) as defined in ETSI TS 102.484; established via network-assisted bootstrapping - for example using GBA as defined in 3GPP TS 33.220 obtained via the terminal from either user input or data generated by or stored on the terminal.

As suggested above, authorisation data may take a number of forms. For example the authorisation data may be a Personal Identification Number (PIN), a password or a key associated with the user, in which case the terminal will only authorise access to a particular controlled domain when the SIM successfully proves possession of the required authorisation data. In the case of PINs and passwords, typically the device will store a hash of the stored authorisation data and check the hash of the authorisation data presented by the SIM against this value. This is primarily done to reduce the risk of authorisation data being accessed from the memory of the device by unauthorised entities. Authorisation data could also take the form of a cryptographic key that is used by the device to decrypt data/code that is required for the domain to operate. Authorisation data could also take the form of a simple data construct (for example a command or value) sent from the SIM to the terminal/device. In this case the terminal may only respond to the command if it can authenticate the SIM as the origin of the command, for example, if the data construct is delivered over a secure authenticated channel (SAC) such as that defined in ETSI TS 101.484. Alternatively, the data construct could be digitally signed or associated with a Message Authentication Code (MAC) by the SIM, and the terminal could verify that the signature or the MAC over the data construct was valid. In some cases the establishment of a SAC could in itself act as authorisation data, for example, if the device or a domain on the device is able to (re-)establish a SAC with a SIM, the device authorises access to a controlled domain or domains. In this last case, the ability of the SIM to establish a SAC with the terminal provides proof that the SIM has possession of a shared key - this key then acts as the authorisation data.

When required to do so, the device makes an authorisation decision based on its security policy. The device's security policy will typically require that an authorisation decision for a particular controlled domain is required after certain triggers, which may include at least one of:
a) the first time a device is used with a particular SIM;
b) when the device is powered on;
c) after a period of user inactivity;
d) after a certain period of time has elapsed.

Preferably the removable storage device verifies the data received from the terminal was generated using an MTM or a TPM associated with the one or more executable engines. In this aspect of the invention, by provisioning the terminal with a removable storage device, such as a SIM, which contains an Engine's MTM, it becomes possible to control use of the Engine, such that it can only be activated when the SIM is present. Therefore, the MTM provides the Engine/domain on the terminal with the authorisation data required for the Engine to operate.

Where the terminal is adapted for use with a cellular or mobile telecommunications network, the authorisation data is conveniently provided to the terminal by an Over The Air (OTA) communication.

A "domain" can be considered as a set of device capabilities and/or stored data that are accessible to the user when the user is operating a device in a particular mode. A device or terminal may implement a single domain or multiple domains. Domains can be implemented as user accounts, hard disk partitions (virtual and physical), Secure Execution Environments (SEEs) or execution engines.

In relation to TPM/MTMs, each domain can be thought of as being owned by a particular stakeholder. The stakeholder for a domain may also be the device user, (e.g. in the case of a user domain), but not necessarily. For instance, an enterprise might set up a domain containing corporate applications, which it administers, and allow one or more users to access that domain but not to change the configuration of the domain by adding or removing applications.

Domains can be nested inside other domains, for example there may be multiple user domains nested within a single hard disk partition domain.

Some domains on a device may have access to capabilities and/or data that only authorised users should be able to access - henceforth domains with this property will be referred to as "controlled domains". To ensure that only authorised users can access a controlled domain, the device is required to make access authorisation decisions based on authorisation data presented by the user. For a device implementing multiple domains, a user may be expected to remember and/or enter multiple pieces of authorisation data. To increase the security afforded by authorisation mechanisms such as passwords, devices may enforce password complexity policies, for example requiring a mix of lower and upper case letters, numbers and characters and a password of a certain length. In addition the device may require that the authorisation data is changed on a regular basis, for example every month. The device may also require that the authorisation data is re-entered after a set period of inactivity, for example 30 minutes. The mechanisms described above relating to authorisation data all act to increase security but at the cost of increasing the burden on the user. The associated decrease in usability can lead to users either using the associated services less or finding ways to bypass the security measures enforced by the terminal.

In addition if the authorisation data for the domain is compromised by an unauthorised user, and the unauthorised user has access to the device, the compromised authorisation data could be used by the unauthorised user to gain access to the controlled domain. To address this scenario, the stakeholder of the domain may be able to lock access to a domain or delete a domain Over The Air (OTA), however, this will typically only be possible if the terminal re-establishes connectivity to the mobile network and supports the necessary device management capabilities.

As previously mentioned, domains can be implemented as execution engines.

The method above may advantageously further comprise using the removable storage device to temporarily disable, permanently disable, deactivate or clear data in the TPM/MTM relating to a domain if the domain is not needed, or as a safety measure.

Alternatively, the method above may further comprise using an Over The Air instruction to the terminal to instruct the removable storage device to disable or clear data relating to one or more domains.

In a further alternative, the method above may further comprise the removable storage device disabling data in the TPM/MTM or the TPM/MTM itself when network coverage to the terminal is removed. The removable storage device may then enable the data or the TPM/MTM itself when network coverage is restored, or upon receiving instructions to do so,

In another aspect, the present invention provides a method of managing one or more executable engines on a terminal including a removable storage device, the method including:
providing the removable storage device with authorisation data relating to the one or more executable engines, the authorisation data usable in managing the one or more engines; and
storing the data in a secure store on the removable storage device, so that the management of the executable engines is only possible when the removable storage device is associated with the terminal.

In a further aspect the present invention provides a method of asserting ownership of one or more executable engines on a terminal, the terminal including a removable storage device, the method including:
provisioning the removable storage device in the terminal;
using code on the removable storage device to determine the ownership status of the one or more executable engines on the terminal;
where an engine is determined to be unowned, asserting ownership of the engine, and storing authorisation data in relation to ownership of the engine on the removable storage device.

In yet another aspect of the invention there is provided, a removable storage device configured for use with a terminal having one or more controlled domains, the removable storage device configured to receive data for verification from the terminal and provide the terminal with authorisation data relating to one or more controlled domains upon the received data being verified.

Preferably, the removable storage device is configured to authenticate the terminal by determining an identifier of the terminal, such as its IMEI.

The removable storage device may be configured to provide an indication which notifies the terminal of the one or more domains which the user is entitled to access.

The terminal associated with this remote storage device is conveniently adapted for use with a cellular or mobile telecommunications network. Here the one or more domains may comprise executable engines and the removable storage device may be configured to verify the data received from the terminal using a Mobile Trusted Module (MTM) or a Trusted Platform Module (TPM) associated with the one or more executable engines. The removable storage device is then preferably a SIM, UICC or USIM.

Additionally, the removable storage device may be configured to receive the authorisation data when associated with the terminal, via an Over The Air (OTA) communication.

### Brief Description of the Drawings

For a better understanding of the present invention, embodiments will now be described, by way of example only, with reference to the accompanying drawings, in which:-
Figure 1 shows a generalised trusted platform for use on a mobile terminal, useful in explaining the operation of the background to the present invention;
Figure 2 shows schematically the elements of a telecommunications network including mobile telecommunication terminals; and
Figure 3 shows schematically some elements present in one of the telecommunications terminals of Figure 2;
Figure 4 illustrates a terminal arrangement useful in describing embodiments of the invention;
Figure 5 illustrates a schematic diagram useful in describing an embodiment of the invention in which a user authenticates himself to the SIM using a SIM PIN and the SIM proves possession of the authorisation data in order to access three controlled domains on the terminal; and
Figure 6 illustrates a schematic diagram useful in describing a further embodiment of the invention in which the user authenticates himself to a domain on the terminal.

### Detailed Description of Embodiments of the Invention

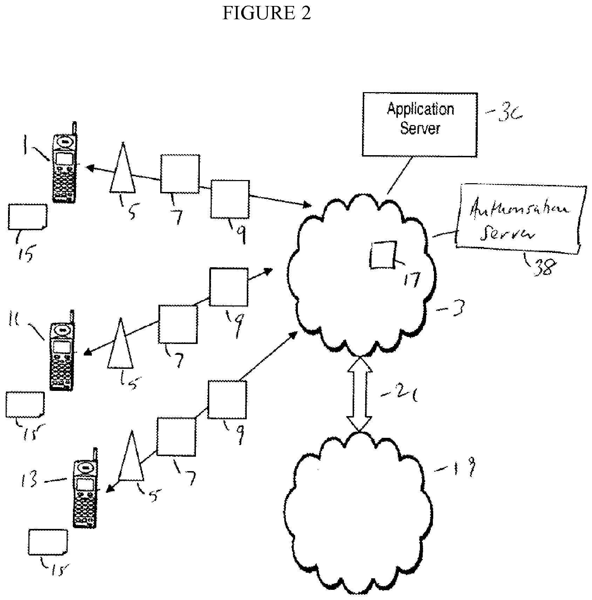

The elements of a conventional mobile or cellular telecommunications network will first be briefly described with reference to Figure 2.

Figure 2 shows schematically a network in which the invention may be used. The figure shows a cellular network. However, it should be appreciated that the invention is applicable to any type of network, although it is particularly applicable to a network where at least some of the devices communicate using mobile telecommunications/wireless data transmission.

A first telecommunications terminal 1 is registered with a GSM/GPRS or UMTS (3G) mobile telecommunications network 3. The telecommunications terminal 1 may be a handheld mobile telephone, a personal digital assistant (PDA) or a laptop computer equipped with a datacard. The telecommunications terminal 1 communicates wirelessly with mobile telecommunications network 3 via the radio access network (RAN) of the mobile telecommunications network 3, comprising, in the case of a UMTS network, a base station (Node B) 5, and a radio network controller (RNC) 7. Communications between the telecommunications terminal 1 and the mobile telecommunications network 3 are routed from the radio access network via GPRS support nodes (SGSN) 9, which may be connected by a fixed (cable) link to the mobile telecommunications network 3.

In a conventional manner, a multiplicity of other telecommunications terminals is registered with the mobile telecommunications network 3. These telecommunications terminals include second and third telecommunications terminals 11, 13. The second and third telecommunications terminals 11, 13 communicate with the mobile telecommunications network 3 in a similar manner to the telecommunications terminal 1, that is via an appropriate Node B 5, RNC 7 and SGSN 9.

The mobile telecommunications network 3 includes a gateway GPRS support node (GGSN) 17 that enables IP-based communications with other networks, such as the Internet or other IP network 19 via an appropriate link 21.

Each of the telecommunications terminals 1, 11 and 13 is provided with a respective subscriber identity module (SIM) 15. During the manufacturing process of each SIM, authentication information is stored on the SIM under the control of the mobile telecommunications network 3. The mobile telecommunications network 3 itself stores details of each of the SIMs issued under its control. In operation of the mobile telecommunications network 3, each of the telecommunications terminals 1, 11, 13 is authenticated (for example, when the user activates the telecommunications terminal in the network with a view to making or receiving calls) by the network sending a challenge to the telecommunications terminal 1,11,13 incorporating a SIM 15, in response to which the SIM 15 calculates a reply (dependent on the predetermined information held on the SIM - typically an authentication algorithm and a unique key Ki) and transmits it back to the mobile telecommunications network 3. The mobile telecommunications network 3 includes an authentication processor 17 which generates the challenge and which receives the reply from the telecommunications terminal 1, 11, 13.

Using pre-stored information identifying the relevant SIM 15, the authentication processor calculates the expected value of the reply from the telecommunications terminal 1, 11, 13. If the reply received matches the expected calculated reply, the SIM 15 and the associated telecommunications terminal are authenticated.

It should be understood that such an authentication process may be performed for any telecommunications terminal provided with a SIM 15 under control of the mobile telecommunications network 3. In the embodiment each telecommunications terminal 1,11,13 communicates wirelessly with the mobile telecommunications network 3 via the network's radio access network, although this is not essential. For example, the telecommunications terminal may communicate with the network via the fixed telephone network (PSTN), via a UMA "access point" and/or via the Internet.

The SIM 15 used by each telecommunications terminal 1,11,13 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

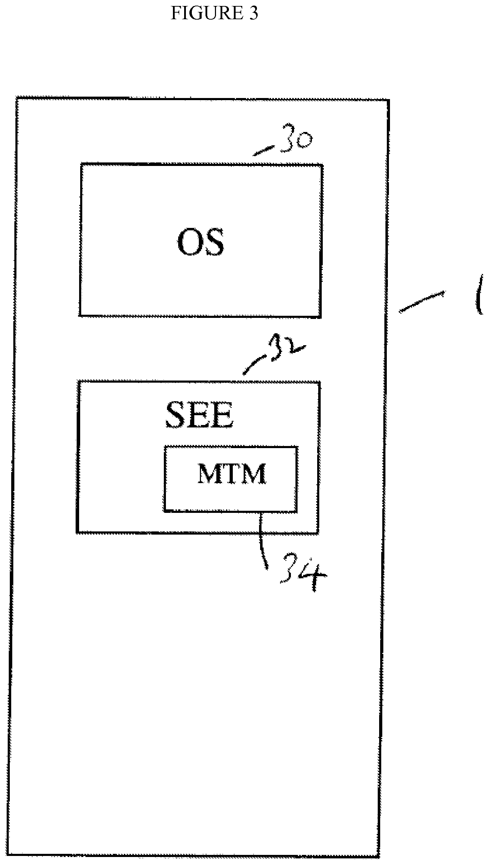

As shown in Figure 3, the mobile terminal 1 includes a main operating system (OS) 30, similar to that found on a conventional mobile terminal. The operating system 30 can be considered to be a "normal execution environment". The mobile terminal 1 further includes a secure execution environment (SEE) 32 in which a Device Manufacturer's mobile trusted module (MTM) 34 is implemented, where the MTM is implemented in software. In the SEE 32 very secure applications can be stored and typically comprise less than 10K of data. Alternatively, of course, the MTM can be implemented in hardware, in a chip, which is associated with the SIM.

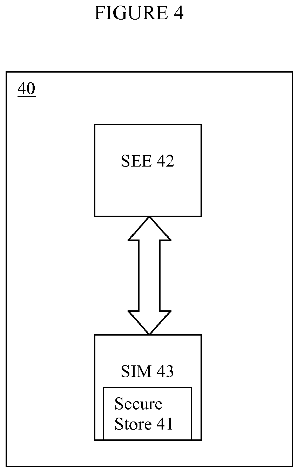

With reference to Figure 4, according to a first embodiment of the invention a user's SIM 43 is provided with secure data storage 41 for safely storing authorisation data for one or more controlled domains on a terminal.

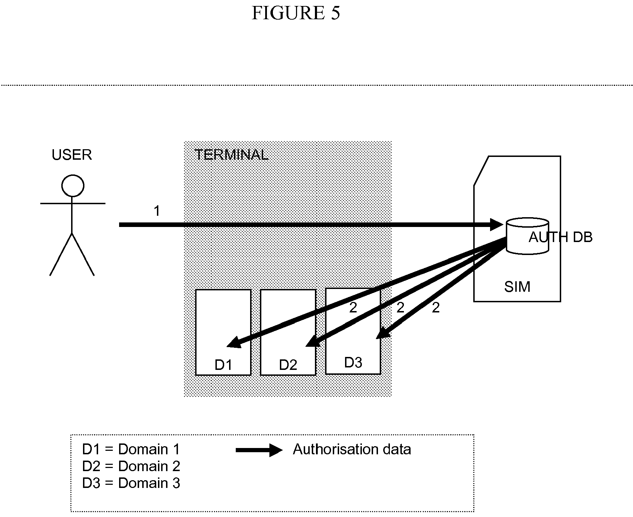

Considering the situation of the terminal 40 being powered on, the SIM 43 (via the terminal) would first ask the user to enter their SIM PIN. With reference to Figure 5, the user would then enter their SIM PIN into the terminal 40 (step 1). On reception of the correct SIM PIN the SIM would check its Authorisation Database (AUTH DB) for the passwords associated with the controlled domains (D1, D2, D3) present on the terminal. If the SIM's AUTH DB contains passwords for the controlled domains present on the terminal, the SIM provides the required proof of possession of these passwords to the terminal (step 2). The terminal then allows the user to access the controlled domains.

Therefore, in this way, by securely storing passwords to controlled domains in a SIM's secure store 41, a mechanism for enabling the user to unlock the SIM and verify themselves to one or more controlled domains is provided, which only requires a single password from the user, but which in fact covers multiple passwords for not only the SIM, but each of the controlled domains. Also, in this way, it is possible to control a user's access to the controlled domains, in that their SIM PIN is only associated with the controlled domains on the terminal which they have the authority to use/view, as applicable. For instance, there may be an additional domain on the terminal, D4, which the user is not authorised to use/view, so upon the user entering their SIM PIN, the SIM will not provide proof of possession to the terminal for that domain D4.

In addition, it is possible to configure the SIM to only provide the authorisation data associated to a domain on the terminal if the user has been successfully authenticated by the SIM. The SIM could authenticate the user through the use of a SIM pincode or by any other authentication mechanism, including (but not limited to): a biometric measurement, the presence of a Near Field Communication (NFC) enabled token or a user password. Therefore, unless the right SIM is present and the user has been successfully authenticated by the SIM, certain services or data will not be available. This allows the SIM to implement a Single Sign On (SSO) service for multiple domains on the device, thereby improving usability while ensuring high levels of security.

Where the domains correspond to engines, if the user has not been authenticated by the SIM, the SIM could either choose not to provide the authorisation data for a particular domain or domains, or not to re-enable the TPM/MTM until the user has been successfully authenticated.

In addition, it is possible to configure the SIM to only provide the authorisation data if the device has been successfully authenticated to the SIM, for example as part of the establishment of a Secure Authenticated Channel.

In addition, it is possible to configure the SIM to only provide the authorisation data to the device if the device has been successfully authenticated to the SIM and the device provides the required authorisation data to the SIM. This authorisation data may take any of the forms previously described for the authorisation data stored on the SIM and may also take the form of measurements made by the terminal, such as contextual information like location, or may take the form of data stored on or generated by the terminal, for example a device identifier such as IMEI. When the terminal presents proof of possession of authorisation data to the SIM, the SIM may make an authorisation decision locally, e.g. by checking the provided value against an expected value, or the SIM may delegate the authorisation decision to a trusted network entity by communicating the data provided value to the network entity and acting on the response provided.

Different methods may be used for the discovery of the controlled domains present on the terminal. For example the terminal may include its identifier (e.g. its IMEI) and/or the identifiers associated to the controlled domains (e.g. usernames, account identifiers) as part of the SIM PIN message exchange or as part of a separate message exchange triggered after a successful SIM PIN exchange.

Different methods may also be used for the SIM to prove its possession of the passwords. For instance, the SIM could provide the terminal with a hash of each password.

Advantageously, the communication between the terminal and the SIM would be protected by the use of a secure channel as specified in ETSI TS 102 484.

According to a second embodiment of the invention a user's SIM 43 is provided with secure data storage 41 for safely storing authorisation data for confirming ownership, including delegated ownership, of one or more Engines on a mobile device 40.

Considering the situation of SIM 43 being inserted into device 40, the SIM would first authenticate the device 40. This is preferably achieved by establishing a secure channel to a trusted area, such as SEE 42, and performing appropriate checks to determine whether the device supports a suitable Trusted Computing environment that can be managed by the SIM. For instance, the terminal may be deemed to be authenticated if it contains a suitable Device Manufacturer's MTM.

Typically, the aforementioned secure channel will be set up by first establishing a Master Secret between the SIM and the trusted area, using the mechanisms described in 3GPP TS 33.110. During this first set up, the mobile network will be able, for instance, to authenticate the Device Manufacturer's MTM, using a private key stored in the MTM and associated certificate. The network can also obtain a full report from the MTM on the terminal's boot state and capabilities. Once the network has successfully authenticated the MTM, it will arrange for the Master Secret to be securely supplied to both the terminal and the SIM card, and for the Master Secret to be "sealed" on the terminal to an appropriate security state, ensuring that the Master Secret is only available to the terminal when the terminal has again reached a satisfactory boot state and capabilities. After this, the SIM can efficiently authenticate the MTM whenever needed using the Master Secret, and establishing session-specific secrets as described in ETSI TS 102 484.

Where a suitable environment is found to exist, the SIM may then check to see if any engines have been installed on the device 40 and for which ownership has not been established. This may be achieved by checking the "ownership", "deactivated" and "disable" flags in each engine's MTM/TPM. Where the "deactivated" or "disable" flag is set to "true" or the ownership flag is set to "false", then the SIM can attempt to activate/enable/allow ownership of the MTM or TPM using control signals sent through the secure channel (though for security reasons, the user will generally need to confirm these steps). Where the ownership=true and disable=false, the SIM can attempt to run the "TakeOwnership" procedure and establish itself as the owner of any so far unowned engines. If the engine is unowned, the TakeOwnership procedure effectively installs the SIM's chosen authorisation data in the MTM or TPM, creates appropriate security keys and prevents other entities taking ownership of the Engine. In this way, the SIM 43 can also be used to assert ownership of TPMs/MTMs for the device in which it is placed. The SIM retains a copy of the authorisation data in its secure data store for future use of the Engine.

Once this is done, any previously unowned Engines, which would have been transparent to the user of the device, will become visible to the user of the device, and they will be able to make use of the engines and not have them sitting on the platform, vulnerable to illicit third parties taking control of the unused engines. This is advantageous for the device user, as they would not otherwise have been able to see the unused engines.

Once the data is in the secure store 41 of the SIM, if the owner wants to activate one of their Engines, they need only instruct the SIM 43 to do so, typically via a user interface on the terminal, and the SIM will communicate with the Engine by a secure link to the SEE 42 and provide the necessary authorisation data to activate the Engine.

By having the SIM able to exercise ownership functions over an Engine, the SIM would be able to enable or disable the engine's MTM/TPM. It would also be able to set up and use different identity keys for the MTM/TPM, and also to create or modify a secure boot sequence for any engine that it owns, and preferably also for which it is a proxy owner for. In this way, the SIM is able to become a control point for the owner of the device and also the owners of the engines.

According to a further embodiment of the invention, for engines that are already owned, and for which the SIM has not yet been provided with authorisation data, then either the ownerAuth data or suitable delegate authorisation data may be provided to the SIM by a suitable means, such as an Over The Air (OTA) update.

Once the authorisation data for managing those already-owned engines is received by the SIM, it is stored in the secure store 41 on the SIM 43. This may apply both to engines owned by the local owner (user) of the device, and to engines with remote owners, such as a manufacturer or network operator.

In this regard, it is to be appreciated that where a device contains several different MTMs/TPMs, either physical or logical, and these have different stakeholder owners, then the SIM card can assert ownership of all of them using a stakeholder-specific application. For instance, the SIM will contain application(s) that can be used to store the different authorisation data for each relevant stakeholder's TPM/MTM in isolated areas on the SIM. One general application - with logic that is available to all the different isolated areas - may be used to effect this functionality, or a different application for each stakeholder may be used. The application or applications can be securely updated, as required, by OTA, either by the network operator or by another trusted party.

Where the owner is local (the device user), the owner can instruct management of the engine, such as by entering an appropriate command via a keypad, or other input mechanism, of the device 40. Where the owner is a remote owner, the instructions to manage their engine may be received by an Over The Air (OTA) command, or they may be pre-programmed into the corresponding stakeholder-specific application. Therefore, in this way, the SIM card effectively acts as the owner's secure local management proxy.

It is to be appreciated that the owner of the SIM may be entitled to use the SIM in multiple devices. In this scenario, the SIM would store authentication data for each of the devices in its secure store.

Where the user changes SIM, or the device 40 is passed to another user with a different SIM, this embodiment of the invention provides a convenient transferral mechanism. In this regard, since the authorisation data for device 40 is contained in the secure store of SIM 43, it is a simple procedure to transfer the data from SIM 43 to the new user's SIM using an OTA update. The new user's SIM can then use TPM/MTM commands to change the authorisation data, if so desired.

In addition, the SIM 43 is configured to perform functions requiring use of the authorisation data by securely proving possession of the appropriate data to one or more Engines' TPMs/MTMs on a mobile device 40. This enables at least the following management actions to be performed by the SIM:
- The SIM can temporarily disable or deactivate the TPM/MTM if it does not currently need to be used, or as a precautionary measure if there is suspicion that the corresponding Engine has come under attack.
- The SIM can permanently disable, deactivate or clear the TPM/MTM if the Engine is no longer needed, or as a safety measure in case of known attack (device theft for example).
- The SIM can arrange that the TPM/MTM is disabled at power-down, so that at next power-up, the SIM will need to be present to re-enable it. (And if not, the Engine is not usable on that power-up cycle.)
- The SIM can adjust the boot properties (and some run-time properties) of the Engine by causing its MTM to create new Reference Integrity Metrics (RIMs). Or else it can load a verification root public key called the RVAI to the MTM, which will allow parties authorised by the holder of the corresponding RVAI private key to create RIMs for the Engine.
- The SIM can increase monotonic counters in the TPM/MTM, thereby invalidating data linked to previous versions of these counters. For example, when revoking RIMs or updating the operating system.
- The SIM can create and activate new identity keys (AIKs) for the engine's TPM/MTM. This enables the user's privacy to be protected as it avoids linkage of identities.
- The SIM can create other keys that are to be stored in the TPM/MTM and set their authorisation data to its own stored authData; this means that only the SIM can then make use of these keys.
- The SIM can delegate any of these functions (or assign control of any keys that it creates) to other processes on the platform.

In other words, by having the authorisation data on the SIM 43, the user (or remote owner) is not required to manually enter the authorisation data (or store it on the device), and so the problem of passwords being forgotten and Engines reset is overcome.

Further, the user can then also use the SIM card 43 as an enhanced locking mechanism, in that critical parts of the mobile device 40 can be configured to not function unless ownership is asserted. Therefore, unless the right SIM is present, certain services or data will not be available.

In the event of a device being stolen together with the user's SIM and stored authorisation data, it is possible for the user to contact their network provider, who will be able to delete the authorisation data remotely on their behalf by use of OTA instructions. The SIM may also be instructed to permanently disable and clear the associated engines of the device, as discussed above. This mechanism will work provided the device and SIM are still connected to a mobile network when the OTA instructions are sent. Alternatively, if the SIM and device have already been removed from the network, then the SIM could temporarily "lock" the authorisation data (or disable the related MTMs) until network coverage is reestablished, and the SIM receives further instructions.

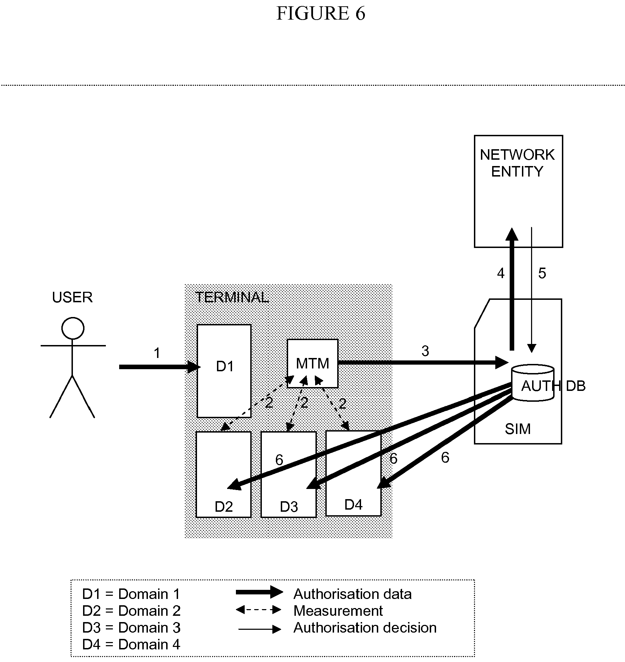

Figure 6 provides a further embodiment of the invention. In this embodiment, the user again enters their PIN or other authorisation data into the terminal (step1). In this embodiment, however, the terminal verifies the user's PIN via one of its own applications (D1). If the terminal finds the user to be authorised, the terminal the MTM on the terminal will then undertake measurement reports of its domains (step 2).The MTM on the terminal then provides a measurement report to the SIM (step 3). The SIM in turn transmits the measurement report to a network entity (step 4); the network entity checks the authenticity and value of the measurement before providing an authorisation decision to the SIM (step 5). On receiving a positive authorisation decision, the SIM provides proof of possession of the authorisation data for each of the controlled domains present on the terminal to which the SIM holds authorisation data in its AUTH DB (step 6), which is then able to grant the user access to the relevant controlled domain(s).

The embodiments of the invention have been described in relation to a mobile device, such as a mobile phone, portable computer or PDA. It is, however, to be appreciated that the embodiments of the invention may also be applied to other devices with computing capabilities such as a personal computer. In this regard, although the embodiments have been described in relation to a SIM card, the embodiments may equally be applicable to any other removable memory device.

The embodiments of the invention also have particular utility for users upgrading their devices, for users who have multiple mobile devices, such as a work device and a personal device, and also for users who share their mobile terminals. A further use for these embodiments of the invention is in relation to users migrating data and services between a mobile terminal and a PC and/or a set-box or the like.

## Claims

1. A method of controlling user access to one or more domains (D1, D2, D3, D4) on a terminal (40) through the use of a removable storage device (43), wherein the removable storage device (43) serves as a control point for a user and the one or more domains (D1, D2, D3, D4) on the terminal (40) by virtue of possessing authorisation data for the user in respect of the one or more domains (D1, D2, D3, D4), the method including:
providing the removable storage device (43) with data to be verified (step 1);
the removable storage device (43) verifying the validity of the data received from the terminal (40) by comparing the received data to the authorisation data in an authorisation database (41) of the removable storage device (43) in order to obtain a verification decision, wherein the verification decision is dependent upon said provided data; and
upon the verification providing a positive verification decision, checking whether the removable storage device (43) possesses the authorisation data for the user, and, if the removable storage device (43) does possess the authorisation data, the removable storage device (43) provides the terminal (40) with a positive access indication, thereby providing the terminal (40) with proof of possession of the authorisation data for the user in respect of the one or more domains (D1, D2, D3, D4) on the terminal (40), such that the removable storage device (43) only provides the positive access indication of the user to the terminal (40) when the terminal itself has been positively authenticated; and
upon the terminal (40) receiving the positive access indication, the terminal (40) allowing the user to access the one or more domains (step 2).

2. The method of any one preceding claim wherein the removable storage device (43) verifies the validity of the data received from the terminal (40) by transmitting the data for verification to a remote network entity, the remote network entity comparing the data against expected data, and transmitting the verification decision to the removable storage device (43)..

3. The method of claim 1 wherein the provided data is a user identifier and the authorisation data in the authorisation database (41) identifies an allowed user or users in respect of each of the one or more controlled domains (D1, D2, D3, D4)..

4. The method of claim 1 wherein the step of the removable storage device (43) authenticating the terminal (40) includes determining if the terminal is in a trusted state, and the removable storage device (43) only providing the positive access indication of the user to the terminal (40) when the terminal is determined as being in a trusted state.

5. The method of any one preceding claim wherein the terminal is adapted for use with a cellular or mobile telecommunications network and the one or more domains (D1, D2, D3, D4) comprise executable engines, the method further including allowing one or more of the engines to be executed once the removable storage device (43) provides the positive access indication for the user in respect of those one or more engines.

6. The method of any one of claims 1 to 5 wherein the one or more domains (D1, D2, D3, D4) comprise one or more executable engines, the method further including:
providing the removable storage device (43) with the authorisation data relating to the one or more executable engines, the authorisation data usable in managing the one or more engines, such as to control user access to the one or more engines; and
storing the data in a secure store (41) on the removable storage device (43), so that the management of the executable engines is only possible when the removable storage device (43) is associated with the terminal (40).

7. A method of any one preceding claim wherein the one or more domains (D1, D2, D3, D4) comprise one or more executable engines, the method further including:
provisioning the removable storage device (43) in the terminal (1);
using code on the removable storage device (43) to determine the ownership status of the one or more executable engines on the terminal (1);
where an engine is determined to be unowned, asserting ownership of the engine, and storing authorisation data in relation to ownership of the engine on the removable storage device (43).

8. The method of claim 7 further comprising, where an engine is found to be owned, obtaining consent from the owner of the engine to store their authorisation data or appropriate delegate authorisation data on the removable storage device (43).

9. The method of claim 7 or 8 wherein the one or more executable engines are associated with a Mobile Trusted Module (MTM) or a Trusted Platform Module (TPM) and the method further comprising, before asserting ownership, determining if the engine's MTM/TPM is disabled or deactivated, and where the MTM/TPM is found to be disabled or deactivated, enabling or activating the MTM/TPM.

10. A removable storage (43) device configured for use with a terminal (40) having one or more controlled domains (D1, D2, D3, D4), wherein the removable storage device (43) serves as a control point for a user and the one or more controlled domains on the terminal by virtue of possessing authorisation data for the user in respect of the one or more domains (D1, D2, D3, D4), the removable storage device (43), when associated with the terminal (40), configured to:
receive data for verification from the terminal (40);
verify the validity of the data received from the terminal (40) by comparing the received data to the authorisation data in an authorisation database (41) of the removable storage device (43) in order to obtain a verification decision, wherein the verification decision is dependent upon said received data; and
upon obtaining a positive verification decision, check whether the removable storage device (43) possesses the authorisation data for the user, and, if the removable storage device (43) does possess the authorisation data, provide the terminal (40) with a positive access indication, thereby providing the terminal (40) with proof of possession of the authorisation data for the user in respect of the one or more controlled domains (D1, D2, D3, D4) on the terminal (40), which the terminal takes as permission to allow the user to access the one or more controlled domains such that the removable storage device (43) only provides the positive access indication of the user to the terminal (40) when the terminal itself has been positively authenticated.

11. The device of claim 10 wherein the data received by the removable storage device (43) from the terminal for verification is data provided by the user

12. The device of claim 10 wherein the data received by the removable storage device (43) from the terminal for verification is measurement data relating to the one or more domains (D1, D2, D3, D4) and the removable storage device (43) is further configured to:
verify the validity of the data received from the terminal (40) by transmitting the data for verification to a remote network entity, and
after the remote network entity has compared the data against expected data, receiving the verification decision from the remote network entity.

13. The device of any one of claims 10 to 12 wherein the received data comprises an identifier of the user of the terminal (40), and the removable storage device (43) is further configured to compare the received user identifier to one or more allowed user identifiers stored in the secure data store (41) in respect of each of the one or more controlled domains (D1, D2, D3, D4).

14. The device of claim 10 wherein the removable storage device (43) is further configured to authenticate the terminal (40) by determining if the terminal is in a trusted state, and only provide the positive access indication of the user to the terminal, when the terminal (40) is determined as being in a trusted state.

15. The removable storage device (43) of any one of claims 10 to 14, wherein the one or more domains (D1, D2, D3, D4) comprise one or more executable engines, and the removable storage device (43) is further configured to:
receive authorisation data relating to the one or more executable engines, the authorisation data usable in managing the one or more engines, and
store the data in a secure store (41) on the removable storage device (43), so that the management of the executable engines is only possible when the removable storage device (43) is associated with the terminal (40).

16. A user terminal (40) incorporating the removable storage device (43) as claimed in any one of claims 10 to 15.

17. A terminal (40) configured to perform a method according to any one of claims 1 to 9.

## Patentansprüche

1. Ein Verfahren zur Kontrolle des Benutzerzugriffs auf eine oder mehrere Domains (D1, D2, D3, D4) auf einem Endgerät (40) über die Verwendung einer entfernbaren Speichervorrichtung (43), wobei die entfernbare Speichervorrichtung (43) als ein Kontrollpunkt für einen Benutzer und die eine oder die mehreren Domains (D1, D2, D3, D4) auf dem Endgerät (40) dient, mittels des Aufweisens von Autorisierungsdaten für den Benutzer in Bezug auf die eine oder die mehreren Domains (D1, D2, D3, D4), wobei das Verfahren Folgendes umfasst:
Bereitstellen von zu verifizierenden Daten an die entfernbare Speichervorrichtung (43) (Schritt 1);
Verifizieren der Gültigkeit der von dem Endgerät (40) empfangenen Daten durch die entfernbare Speichervorrichtung (43), indem die empfangenen Daten mit den Autorisierungsdaten in einer Autorisierungsdatenbank (41) der entfernbaren Speichervorrichtung (43) verglichen werden, um eine Verifizierungsentscheidung zu ermitteln, wobei die Verifizierungsentscheidung von den genannten bereitgestellten Daten abhängig ist; und
infolge der Bereitstellung einer positiven Verifizierungsentscheidung im Rahmen der Verifizierung, Überprüfen, ob die entfernbare Speichervorrichtung (43) die Autorisierungsdaten für den Benutzer aufweist, und, wenn die entfernbare Speichervorrichtung (43) die Autorisierungsdaten aufweist, Bereitstellen einer positiven Zugriffsanzeige durch die entfernbare Speichervorrichtung (43) an das Endgerät (40), wodurch dem Endgerät (40) ein Nachweis des Aufweisens der Autorisierungsdaten für den Benutzer in Bezug auf die eine oder die mehreren Domains (D1, D2, D3, D4) auf dem Endgerät (40) bereitgestellt wird, derart, dass die entfernbare Speichervorrichtung (43) dem Endgerät (40) die positive Zugriffsanzeige für den Benutzer ausschließlich dann bereitstellt, wenn das Endgerät selbst positiv authentifiziert wurde; und
infolge des Empfangs der positiven Zugriffsanzeige durch das Endgerät (40), Zulassen, durch das Endgerät (40), dass der Benutzer auf die eine oder die mehreren Domains zugreift (Schritt 2).

2. Das Verfahren nach einem vorhergehenden Anspruch, wobei die entfernbare Speichervorrichtung (43) die Gültigkeit der von dem Endgerät (40) empfangenen Daten verifiziert, indem die Daten zur Verifizierung an eine entfernte Netzeinheit übermittelt werden, wobei die entfernte Netzeinheit die Daten mit erwarteten Daten vergleicht, und die Verifizierungsentscheidung an die entfernbare Speichervorrichtung (43) übermittelt wird.

3. Das Verfahren nach Anspruch 1, wobei es sich bei den bereitgestellten Daten um eine Benutzerkennung handelt und die Autorisierungsdaten in der Autorisierungsdatenbank (41) einen oder mehrere zugelassene Benutzer in Bezug auf jede der einen oder mehreren kontrollierten Domains (D1, D2, D3, D4) identifiziert.

4. Das Verfahren nach Anspruch 1, wobei der Schritt des Authentifizierens des Endgerätes (40) durch die entfernbare Speichervorrichtung (43) umfasst, dass bestimmt wird, ob sich das Endgerät in einem vertrauenswürdigen Status befindet, und dass die entfernbare Speichervorrichtung (43) dem Endgerät (40) die positive Zugriffsanzeige für den Benutzer ausschließlich dann bereitstellt, wenn bestimmt wird, dass sich das Endgerät in einem vertrauenswürdigen Status befindet.

5. Das Verfahren nach einem vorhergehenden Anspruch, wobei das Endgerät zur Verwendung mit einem zellularen oder mobilen Telekommunikationsnetz ausgelegt ist und die eine oder die mehreren Domains (D1, D2, D3, D4) ausführbare Maschinen umfassen, wobei das Verfahren weiter umfasst, dass zugelassen wird, dass eine oder mehrere der Maschinen ausgeführt werden, sobald die entfernbare Speichervorrichtung (43) die positive Zugriffsanzeige für den Benutzer in Bezug auf diese eine oder diese mehreren Maschinen bereitstellt.

6. Das Verfahren nach einem der Ansprüche 1 bis 5, wobei die eine oder die mehreren Domains (D1, D2, D3, D4) eine oder mehrere ausführbare Maschinen umfassen, wobei das Verfahren weiter Folgendes umfasst:
Bereitstellen der Autorisierungsdaten im Zusammenhang mit der einen oder den mehreren ausführbaren Maschinen an die entfernbare Speichervorrichtung (43), wobei die Autorisierungsdaten für die Verwaltung der einen oder der mehreren Maschinen verwendbar sind, derart, dass der Benutzerzugriff auf die eine oder die mehreren Maschinen kontrolliert wird; und
Speichern der Daten in einem sicheren Speicher (41) auf der entfernbaren Speichervorrichtung (43), derart, dass die Verwaltung der ausführbaren Maschinen ausschließlich dann möglich ist, wenn die entfernbare Speichervorrichtung (43) mit dem Endgerät (40) verknüpft ist.

7. Ein Verfahren nach einem vorhergehenden Anspruch, wobei die eine oder die mehreren Domains (D1, D2, D3, D4) eine oder mehrere ausführbare Maschinen umfassen, wobei das Verfahren weiter Folgendes umfasst:
Bereitstellen der entfernbaren Speichervorrichtung (43) in dem Endgerät (1);
Bestimmen des Eigentümerstatus der einen oder der mehreren ausführbaren Maschinen auf dem Endgerät (1) anhand von Code auf der entfernbaren Speichervorrichtung (43);
wenn bestimmt wird, dass eine Maschine keinen Eigentümer hat, Geltendmachen der Eigentümerschaft an der Maschine und Speichern der Autorisierungsdaten im Zusammenhang mit der Eigentümerschaft an der Maschine auf der entfernbaren Speichervorrichtung (43).

8. Das Verfahren nach Anspruch 7, weiter umfassend, wenn bestimmt wird, dass die Maschine einen Eigentümer hat, das Einholen der Einwilligung des Eigentümers der Maschine, um seine Autorisierungsdaten oder entsprechende delegierte Autorisierungsdaten auf der entfernbaren Speichervorrichtung (43) zu speichern.

9. Das Verfahren nach Anspruch 7 oder 8, wobei die eine oder die mehreren ausführbaren Maschinen mit einem Modul für vertrauenswürdige mobile Geräte (Mobile Trusted Module, MTM) oder einem Modul für vertrauenswürdige Plattformen (Trusted Platform Module, TPM) verknüpft werden und das Verfahren vor dem Geltendmachen der Eigentümerschaft weiter umfasst, dass bestimmt wird, ob das MTM/TPM der Maschine abgeschaltet oder deaktiviert ist, und, wenn festgestellt wird, dass das MTM/TPM abgeschaltet oder deaktiviert ist, das MTM/TPM eingeschaltet oder aktiviert wird.

10. Eine entfernbare Speichervorrichtung (43), konfiguriert zur Verwendung mit einem Endgerät (40) mit einer oder mehreren kontrollierten Domains (D1, D2, D3, D4), wobei die entfernbare Speichervorrichtung (43) als ein Kontrollpunkt für einen Benutzer und die eine oder die mehreren kontrollierten Domains auf dem Endgerät dient, mittels des Aufweisens von Autorisierungsdaten für den Benutzer in Bezug auf die eine oder die mehreren Domains (D1, D2, D3, D4), wobei die entfernbare Speichervorrichtung (43) bei Verknüpfung mit dem Endgerät (40) so konfiguriert ist, dass:
Daten zur Verifizierung von dem Endgerät (40) empfangen werden;
die Gültigkeit der von dem Endgerät (40) empfangenen Daten verifiziert wird, indem die empfangenen Daten mit den Autorisierungsdaten in einer Autorisierungsdatenbank (41) der entfernbaren Speichervorrichtung (43) verglichen werden, um eine Verifizierungsentscheidung zu ermitteln, wobei die Verifizierungsentscheidung von den genannten empfangenen Daten abhängig ist; und
infolge des Erhalts einer positiven Verifizierungsentscheidung überprüft wird, ob die entfernbare Speichervorrichtung (43) die Autorisierungsdaten für den Benutzer aufweist, und, wenn die entfernbare Speichervorrichtung (43) die Autorisierungsdaten aufweist, dem Endgerät (40) eine positive Zugriffs anzeige bereitgestellt wird, wodurch dem Endgerät (40) ein Nachweis des Aufweisens der Autorisierungsdaten für den Benutzer in Bezug auf die eine oder die mehreren kontrollierten Domains (D1, D2, D3, D4) auf dem Endgerät (40) bereitgestellt wird, was das Endgerät als Erlaubnis erachtet, zuzulassen, dass der Benutzer auf die eine oder die mehreren kontrollierten Domains zugreift, derart, dass die entfernbare Speichervorrichtung (43) dem Endgerät (40) die positive Zugriffsanzeige für den Benutzer ausschließlich dann bereitstellt, wenn das Endgerät selbst positiv authentifiziert wurde.

11. Die Vorrichtung nach Anspruch 10, wobei es sich bei den Daten, die zur Verifizierung durch die entfernbare Speichervorrichtung (43) von dem Endgerät empfangen werden, um durch den Benutzer bereitgestellte Daten handelt

12. Die Vorrichtung nach Anspruch 10, wobei es sich bei den durch die entfernbare Speichervorrichtung (43) zur Verifizierung von dem Endgerät empfangenen Daten um Messdaten im Zusammenhang mit der einen oder den mehreren Domains (D1, D2, D3, D4) handelt und die entfernbare Speichervorrichtung (43) weiter so konfiguriert ist, dass:
die Gültigkeit der von dem Endgerät (40) empfangenen Daten verifiziert wird, indem die Daten an eine entfernte Netzeinheit zur Verifizierung übermittelt werden, und
nachdem die entfernte Netzeinheit die Daten mit erwarteten Daten verglichen hat, die Verifizierungsentscheidung von der entfernten Netzeinheit empfangen wird.

13. Das Verfahren nach einem der Ansprüche 10 bis 12, wobei die empfangenen Daten eine Kennung des Benutzers des Endgerätes (40) umfassen und die entfernbare Speichervorrichtung (43) weiter so konfiguriert ist, dass die empfangene Benutzerkennung mit einer oder mehreren in dem sicheren Datenspeicher (41) gespeicherten zugelassenen Benutzerkennungen in Bezug auf die eine oder die mehreren kontrollierten Domains (D1, D2, D3, D4) verglichen wird.

14. Die Vorrichtung nach Anspruch 10, wobei die entfernbare Speichervorrichtung (43) weiter so konfiguriert ist, dass das Endgerät (40) authentifiziert wird, indem bestimmt wird, ob sich das Endgerät in einem vertrauenswürdigen Status befindet, und dass dem Endgerät die positive Zugriffsanzeige für den Benutzer ausschließlich dann bereitgestellt wird, wenn bestimmt wird, dass sich das Endgerät (40) in einem vertrauenswürdigen Status befindet.

15. Die entfernbare Speichervorrichtung (43) nach einem der Ansprüche 10 bis 14, wobei die eine oder die mehreren Domains (D1, D2, D3, D4) eine oder mehrere ausführbare Maschinen umfassen und die entfernbare Speichervorrichtung (43) weiter so konfiguriert ist, dass:
Autorisierungsdaten im Zusammenhang mit der einen oder den mehreren ausführbaren Maschinen empfangen werden, wobei die Autorisierungsdaten für die Verwaltung der einen oder der mehreren Maschinen verwendbar sind, und
die Daten in einem sicheren Speicher (41) auf der entfernbaren Speichervorrichtung (43) gespeichert werden, derart, dass die Verwaltung der ausführbaren Maschinen ausschließlich dann möglich ist, wenn die entfernbare Speichervorrichtung (43) mit dem Endgerät (40) verknüpft ist.

16. Ein Benutzerendgerät (40) enthaltend die entfernbare Speichervorrichtung (43) nach einem der Ansprüche 10 bis 15.

17. Ein Endgerät (40), so konfiguriert, dass es ein Verfahren nach einem der Ansprüche 1 bis 9 ausführt.

## Revendications

1. Un procédé de commande d'un accès utilisateur à un ou plusieurs domaines (D1, D2, D3, D4) sur un terminal (40) par l'intermédiaire de l'utilisation d'un dispositif à mémoire amovible (43), où le dispositif à mémoire amovible (43) sert de point de commande pour un utilisateur et les un ou plusieurs domaines (D1, D2, D3, D4) sur le terminal (40) du fait de la possession de données d'autorisation pour l'utilisateur par rapport aux un ou plusieurs domaines (D1, D2, D3, D4), le procédé comprenant :
la fourniture au dispositif à mémoire amovible (43) de données à vérifier (opération 1),
la vérification par le dispositif à mémoire amovible (43) de la validité des données reçues à partir du terminal (40) par la comparaison des données reçues aux données d'autorisation dans une base de données d'autorisation (41) du dispositif à mémoire amovible (43) afin d'obtenir une décision de vérification, où la décision de vérification dépend desdites données fournies, et
après la vérification fournissant une décision de vérification positive, le contrôle si le dispositif à mémoire amovible (43) possède les données d'autorisation pour l'utilisateur et, si le dispositif à mémoire amovible (43) possède les données d'autorisation, le dispositif à mémoire amovible (43) fournit au terminal (40) une indication d'accès positive, fournissant ainsi au terminal (40) une preuve de possession des données d'autorisation pour l'utilisateur par rapport aux un ou plusieurs domaines (D1, D2, D3, D4) sur le terminal (40), de sorte que le dispositif à mémoire amovible (43) fournisse uniquement l'indication d'accès positive de l'utilisateur au terminal (40) lorsque le terminal lui-même a été authentifié positivement, et
après la réception par le terminal (40) de l'indication d'accès positive, l'autorisation donnée par le terminal (40) à l'utilisateur d'accéder aux un ou plusieurs domaines (opération 2).

2. Le procédé selon l'une quelconque des Revendications précédentes où le dispositif à mémoire amovible (43) vérifie la validité des données reçues à partir du terminal (40) par la transmission des données à vérifier à une entité de réseau distante, l'entité de réseau distante comparant les données à des données attendues, et la transmission de la décision de vérification au dispositif à mémoire amovible (43).

3. Le procédé selon la Revendication 1 où les données fournies sont un identifiant d'utilisateur et les données d'autorisation dans la base de données d'autorisation (41) identifient un ou des utilisateur(s) autorisé(s) par rapport à chacun des un ou plusieurs domaines commandés (D1, D2, D3, D4).

4. Le procédé selon la Revendication 1 où l'opération d'authentification par le dispositif à mémoire amovible (43) du terminal (40) comprend la détermination si le terminal est dans un état fiable, et la fourniture par le dispositif à mémoire amovible (43) de l'indication d'accès positive de l'utilisateur au terminal (40) uniquement lorsque le terminal est déterminé être dans un état fiable.

5. Le procédé selon l'une quelconque des Revendications précédentes où le terminal est adapté à une utilisation avec un réseau de télécommunications mobile ou cellulaire et les un ou plusieurs domaines (D1, D2, D3, D4) comprennent des moteurs exécutables, le procédé comprenant en outre l'autorisation donnée à un ou plusieurs des moteurs d'être exécutés une fois que le dispositif à mémoire amovible (43) a fourni l'indication d'accès positive pour l'utilisateur par rapport auxdits un ou plusieurs moteurs.

6. Le procédé selon l'une quelconque des Revendications 1 à 5 où les un ou plusieurs domaines (D1, D2, D3, D4) comprennent un ou plusieurs moteurs exécutables, le procédé comprenant en outre :
la fourniture au dispositif à mémoire amovible (43) des données d'autorisation relatives aux un ou plusieurs moteurs exécutables, les données d'autorisation étant utilisables dans la gestion des un ou plusieurs moteurs, de façon à commander un accès utilisateur aux un ou plusieurs moteurs, et
la conservation en mémoire des données dans un espace mémoire sécurisé (41) sur le dispositif à mémoire amovible (43), de sorte que la gestion des moteurs exécutables soit uniquement possible lorsque le dispositif à mémoire amovible (43) est associé au terminal (40).

7. Un procédé selon l'une quelconque des Revendications précédentes où les un ou plusieurs domaines (D1, D2, D3, D4) comprennent un ou plusieurs moteurs exécutables, le procédé comprenant en outre :
la mise en service du dispositif à mémoire amovible (43) dans le terminal (1),
l'utilisation de code sur le dispositif à mémoire amovible (43) de façon à déterminer le statut de propriété des un ou plusieurs moteurs exécutables sur le terminal (1),
lorsqu'un moteur est déterminé être sans propriétaire, la confirmation de la propriété du moteur et la conservation en mémoire de données d'autorisation en relation avec la propriété du moteur sur le dispositif à mémoire amovible (43).

8. Le procédé selon la Revendication 7 comprenant en outre, lorsqu'un moteur est trouvé être la propriété de quelqu'un, l'obtention d'un consentement du propriétaire du moteur de conserver en mémoire ses données d'autorisation, ou des données d'autorisation déléguées appropriées, sur le dispositif à mémoire amovible (43).

9. Le procédé selon la Revendication 7 ou 8 où les un ou plusieurs moteurs exécutables sont associés à un module fiable de mobile (MTM) ou un module de plateforme fiable (TPM) et le procédé comprenant en outre, avant la confirmation de la propriété, la détermination si le MTM/TPM du moteur est désactivé, et lorsque le MTM/TPM est trouvé être désactivé, l'activation du MTM/TPM.

10. Un dispositif à espace mémoire amovible (43) configuré pour une utilisation avec un terminal (40) possédant un ou plusieurs domaines commandés (D1, D2, D3, D4), où le dispositif à mémoire amovible (43) sert de point de commande pour un utilisateur et les un ou plusieurs domaines commandés sur le terminal du fait de la possession de données d'autorisation pour l'utilisateur par rapport aux un ou plusieurs domaines (D1, D2, D3, D4), le dispositif à mémoire amovible (43), lorsqu'il est associé au terminal (40), est configuré de façon à :
recevoir des données à vérifier à partir du terminal (40),
vérifier la validité des données reçues à partir du terminal (40) par la comparaison des données reçues aux données d'autorisation dans une base de données d'autorisation (41) du dispositif à mémoire amovible (43) afin d'obtenir une décision de vérification, où la décision de vérification dépend desdites données reçues, et
après l'obtention d'une décision de vérification positive, contrôler si le dispositif à mémoire amovible (43) possède les données d'autorisation pour l'utilisateur, et, si le dispositif à mémoire amovible (43) possède les données d'autorisation, fournir au terminal (40) une indication d'accès positive, fournissant ainsi au terminal (40) une preuve de possession des données d'autorisation pour l'utilisateur par rapport aux un ou plusieurs domaines commandés (D1, D2, D3, D4) sur le terminal (40), que le terminal considère comme une autorisation de permettre à l'utilisateur d'accéder aux un ou plusieurs domaines commandés de sorte que le dispositif à mémoire amovible (43) fournisse uniquement l'indication d'accès positive de l'utilisateur au terminal (40) lorsque le terminal lui-même a été positivement authentifié.

11. Le dispositif selon la Revendication 10 où les données reçues par le dispositif à mémoire amovible (43) à partir du terminal à des fins de vérification sont des données fournies par l'utilisateur

12. Le dispositif selon la Revendication 10 où les données reçues par le dispositif à mémoire amovible (43) à partir du terminal à des fins de vérification sont des données de mesure relatives aux un ou plusieurs domaines (D1, D2, D3, D4), et le dispositif à mémoire amovible (43) est configuré en outre de façon à :
vérifier la validité des données reçues à partir du terminal (40) par la transmission des données à vérifier à une entité de réseau distante, et
après la comparaison par l'entité de réseau distante des données à des données attendues, la réception de la décision de vérification à partir de l'entité de réseau distante.

13. Le dispositif selon l'une quelconque des Revendications 10 à 12 où les données reçues comprennent un identifiant de l'utilisateur du terminal (40), et le dispositif à mémoire amovible (43) est configuré en outre de façon à comparer l'identifiant d'utilisateur reçu à un ou plusieurs identifiants d'utilisateur autorisés conservés en mémoire dans l'espace mémoire de données sécurisé (41) par rapport à chacun des un ou plusieurs domaines commandés (D1, D2, D3, D4).

14. Le dispositif selon la Revendication 10 où le dispositif à mémoire amovible (43) est configuré en outre de façon à authentifier le terminal (40) par la détermination si le terminal est dans un état fiable, et à fournir l'indication d'accès positive de l'utilisateur au terminal uniquement lorsque le terminal (40) est déterminé être dans un état fiable.

15. Le dispositif à mémoire amovible (43) selon l'une quelconque des Revendications 10 à 14, où les un ou plusieurs domaines (D1, D2, D3, D4) comprennent un ou plusieurs moteurs exécutables, et le dispositif à mémoire amovible (43) est configuré en outre de façon à :
recevoir des données d'autorisation relatives aux un ou plusieurs moteurs exécutables, les données d'autorisation étant utilisables dans la gestion des un ou plusieurs moteurs, et
conserver en mémoire les données dans un espace mémoire sécurisé (41) sur le dispositif à mémoire amovible (43), de sorte que la gestion des moteurs exécutables soit possible uniquement lorsque le dispositif à mémoire amovible (43) est associé au terminal (40).

16. Un terminal d'utilisateur (40) incorporant le dispositif à mémoire amovible (43) selon l'une quelconque des Revendications 10 à 15.

17. Un terminal (40) configuré de façon à exécuter un procédé selon l'une quelconque des Revendications 1 à 9.
